(19) Europäisches Patentamt
European Patent Office
Office européen des brevets

(11) **EP 4 481 873 A1**

(12) **EUROPEAN PATENT APPLICATION**
published in accordance with Art. 153(4) EPC

(43) Date of publication:
**25.12.2024 Bulletin 2024/52**

(21) Application number: **22962474.7**

(22) Date of filing: **21.10.2022**

(51) International Patent Classification (IPC):
**H01M 10/0525** $^{(2010.01)}$

(52) Cooperative Patent Classification (CPC):
**H01M 10/0525**

(86) International application number:
**PCT/CN2022/126797**

(87) International publication number:
**WO 2024/082291 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
Co., Limited
Jiaocheng District
Ningde
Fujian 352100 (CN)**

(72) Inventors:
• **GUO, Jie**
 **Ningde, Fujian 352100 (CN)**

• **HAN, Changlong**
 **Ningde, Fujian 352100 (CN)**
• **WU, Zeli**
 **Ningde, Fujian 352100 (CN)**
• **JIANG, Bin**
 **Ningde, Fujian 352100 (CN)**
• **ZHANG, Cuiping**
 **Ningde, Fujian 352100 (CN)**
• **WANG, Guan**
 **Ningde, Fujian 352100 (CN)**
• **CAI, Linhua**
 **Ningde, Fujian 352100 (CN)**

(74) Representative: **Behr, Wolfgang
Lorenz Seidler Gossel
Rechtsanwälte Patentanwälte
Partnerschaft mbB
Widenmayerstraße 23
80538 München (DE)**

(54) **LITHIUM-ION BATTERY AND ELECTRIC DEVICE**

(57) This application relates to a lithium-ion battery, including a positive electrode, a negative electrode, and an electrolyte, where the negative electrode includes a negative electrode current collector and a negative electrode active material layer containing a negative electrode active material attached to at least one surface of the negative electrode current collector, where an average width-to-length ratio of particles of the negative electrode active material is 0.1-1; an ionic conductivity of the electrolyte is 7-15 mS/cm; and a negative electrode lithiation capacity to positive electrode delithiation capacity ratio CB is 1.05-1.5. An electric apparatus including such lithium-ion battery is also disclosed. The lithium-ion battery has a large-rate fast charging capability and good cycling performance.

EP 4 481 873 A1

**Description**

**TECHNICAL FIELD**

This application relates to the field of lithium battery technologies, and in particular, to a lithium-ion battery, and an electric apparatus.

**BACKGROUND**

In recent years, with increasingly wide use of lithium-ion batteries, lithium-ion batteries have been widely used in energy storage power supply systems such as hydroelectric, thermal, wind, and solar power plants, and many other fields including electric tools, electric bicycles, electric motorcycles, electric vehicles, military equipment, and aerospace. However, as compared with traditional fuel-driven devices, issues such as mileage anxiety and long charging time have become major obstacles to the development of secondary batteries. How the fast charging capability of secondary batteries is improved is one of the key focuses for persons skilled in the art.

Improving the fast charging capability of batteries is a systematic project, which requires changes and upgrades to the materials of batteries. Traditional research primarily focuses on improving the negative electrode materials, but it also requires coordination with materials such as electrolytes and conductive agents. Therefore, existing batteries with fast charging capabilities still require further improvements.

**SUMMARY**

This application is based on the foregoing subject and aims to provide a lithium-ion battery which includes a negative electrode active material with a specific average width-to-length ratio and an electrolyte with a specific ionic conductivity, and has a negative electrode lithiation capacity to positive electrode delithiation capacity ratio CB within a specific range. This enables the resulting battery to have a large-rate fast charging capability and good cycling performance.

To achieve the foregoing object, this application provides a lithium-ion battery and an electric apparatus.

A first aspect of this application provides a lithium-ion battery, including a positive electrode, a negative electrode, and an electrolyte, where the negative electrode includes a negative electrode current collector and a negative electrode active material layer containing a negative electrode active material attached to at least one surface of the negative electrode current collector; an average width-to-length ratio of particles of the negative electrode active material is 0.1-1; an ionic conductivity of the electrolyte is 7 mS/cm-15 mS/cm; and a negative electrode lithiation capacity to positive electrode delithiation capacity ratio CB is 1.05-1.5.

The lithium-ion battery of this application effectively reduces the degree of tortuosity inside the negative electrode plate by including a negative electrode active material with a specific average width-to-length ratio and an electrolyte with a specific ionic conductivity, and having a negative electrode lithiation capacity to positive electrode delithiation capacity ratio CB within a specific range. This improves the conditions for the liquid-phase transport of lithium ions, and provides more active sites at the negative electrode for intercalation of lithium ions, and thereby improves the large-rate fast charging capability and cycling performance of the battery.

In any embodiment, during a charging process from 0% state of charge to 70% state of charge at 35°C, the battery has a current greater than or equal to 4 times the positive electrode delithiation capacity per unit time. This further enhances the large-rate fast charging capability and cycling performance of the battery.

In any embodiment, during a charging process from 0% state of charge to 80% state of charge at 35°C, the battery has an average current greater than or equal to 4 times the positive electrode delithiation capacity per unit time. This further enhances the large-rate fast charging capability and cycling performance of the battery.

In any embodiment, the porosity of the negative electrode active material is 20%-60%. This further provides more active sites at the negative electrode for the intercalation of lithium ions, thereby improving the large-rate fast charging capability and cycling performance of the battery.

In any embodiment, the negative electrode active material layer has a compacted density of 1.2 $g/cm^3$-1.9 $g/cm^3$ and a coating weight of 5 $mg/cm^2$-18 $mg/cm^2$. This further provides more active sites at the negative electrode for the intercalation of lithium ions, thereby improving the large-rate fast charging capability and cycling performance of the battery.

In any embodiment, the negative electrode active material includes natural graphite, artificial graphite, mesocarbon microbead, hard carbon, soft carbon, silicon, silicon-carbon composite, silicon oxide, or a combination thereof. This further provides more active sites at the negative electrode for the intercalation of lithium ions, thereby improving the large-rate fast charging capability and cycling performance of the battery.

In any embodiment, the negative electrode active material layer has a thickness of 30 $\mu$m-150 $\mu$m. This further

improves the conditions for the liquid-phase transport of lithium ions, and provides more active sites at the negative electrode for the intercalation of lithium ions, thereby improving the large-rate fast charging capability and cycling performance of the battery.

In any embodiment, the active material layer includes a first active material layer containing a first negative electrode active material, and a second active material layer containing a second negative electrode active material attached to a surface of the first active material layer away from the current collector. This further improves the conditions for the liquid-phase transport of lithium ions, and provides more active sites at the negative electrode for the intercalation of lithium ions, thereby improving the large-rate fast charging capability and cycling performance of the battery.

In any embodiment, a volume-based median particle size $D_v50$ of the first negative electrode active material is greater than a volume-based median particle size $D_v50$ of the second negative electrode active material. This further provides more active sites at the negative electrode for the intercalation of lithium ions, thereby improving the large-rate fast charging capability and cycling performance of the battery.

In any embodiment, a compacted density of the first negative electrode active material layer is greater than a compacted density of the second negative electrode active material layer. This further provides more active sites at the negative electrode for the intercalation of lithium ions, thereby improving the large-rate fast charging capability and cycling performance of the battery.

In any embodiment, the electrolyte includes a lithium salt, a solvent, and an additive; where the lithium salt includes a primary lithium salt and a secondary lithium salt. This further improves the conditions for the liquid-phase transport of lithium ions, thereby improving the large-rate fast charging capability and cycling performance of the battery.

In any embodiment, the primary lithium salt is different from the secondary lithium salt, and the primary lithium salt or secondary lithium salt is each independently selected from at least one of $LiPF_6$, $LiN(SO_2F)_2$, $LiBF_4$, $LiN(CF_3SO_2)_2$, $LiClO_4$, $LiAsF_6$, $LiB(C_2O_4)_2$, $LiBF_2C_2O_4$, lithium difluorodioxalate phosphate, $LiPO_2F_2$, $LiFSO_3$, and $LiF$. This further improves the conditions for the liquid-phase transport of lithium ions, thereby improving the large-rate fast charging capability and cycling performance of the battery.

In any embodiment, the primary lithium salt is lithium hexafluorophosphate or LiFSI, accounting for 8wt%-20wt% based on a total weight of the electrolyte; and the secondary lithium salt is at least one of lithium difluoroxalate borate, $LiBF_4$, $LiB(C_2O_4)_2$, and lithium difluorodioxalate phosphate, accounting for 0.001wt%-2wt% based on the total weight of the electrolyte. This further improves the conditions for the liquid-phase transport of lithium ions, thereby improving the large-rate fast charging capability and cycling performance of the battery.

In any embodiment, the solvent includes a cyclic ester and a linear ester; where the cyclic ester accounts for 5%-40% of the solvent by mass, and the linear ester accounts for 60%-95% of the solvent by mass. This further improves the conditions for the liquid-phase transport of lithium ions, thereby improving the large-rate fast charging capability and cycling performance of the battery.

In any embodiment, the cyclic ester is ethylene carbonate, propylene carbonate, or a combination thereof; and the linear ester includes dimethyl carbonate. This further improves the conditions for the liquid-phase transport of lithium ions, thereby improving the large-rate fast charging capability and cycling performance of the battery.

In any embodiment, the linear ester is selected from diethyl carbonate, ethyl methyl carbonate, methyl formate, methyl acetate, ethyl acetate, butyl acetate, methyl propionate, methyl butyrate, ethyl butyrate, propyl butyrate, butyl butyrate, isopropyl acetate, isoamyl acetate, or a combination thereof. This further improves the conditions for the liquid-phase transport of lithium ions, thereby improving the large-rate fast charging capability and cycling performance of the battery.

In any embodiment, a mass percentage b% of the linear ester in the solvent and the ionic conductivity a (mS/cm) of the electrolyte satisfy the following relationship:

$8 \leq a + 3b\% \leq 16$. This further improves the conditions for the liquid-phase transport of lithium ions, and provides more active sites at the negative electrode for the intercalation of lithium ions, thereby improving the large-rate fast charging capability and cycling performance of the battery.

In any embodiment, the positive electrode includes a current collector and a positive electrode active material layer containing a positive electrode active material attached to at least one surface of the current collector, where the positive electrode active material includes a ternary represented by formula $LiNi_xCo_yQ_zM_{1-x-y-z}O_2$, where Q is Mn or Al, M includes at least one of Co, Ni, Mn, Mg, Cu, Zn, Al, Sn, B, Ga, Cr, Sr, V, and Ti, $0 \leq x < 1$, $0 \leq y \leq 1$, $0 \leq z \leq 1$, and $x + y + z \leq 1$. This further improves the conditions for the liquid-phase transport of lithium ions, and provides more active sites at the negative electrode for the intercalation of lithium ions, thereby improving the large-rate fast charging capability and cycling performance of the battery.

A second aspect of this application provides an electric apparatus, characterized by including the secondary battery according to the first aspect of this application.

The lithium-ion battery of this application includes a negative electrode active material with a specific average width-to-length ratio and an electrolyte with a specific ionic conductivity, and has a negative electrode lithiation capacity to positive electrode delithiation capacity ratio CB within a specific range. This improves the conditions for the liquid-phase transport of lithium ions, and provides more active sites at the negative electrode for intercalation of lithium ions, and thereby improves the large-rate fast charging capability and cycling performance of the battery.

BRIEF DESCRIPTION OF DRAWINGS

FIG. 1 is a schematic diagram of a secondary battery according to an embodiment of this application.
FIG. 2 is an exploded view of the secondary battery according to the embodiment of this application in FIG. 1.
FIG. 3 is a schematic diagram of an electric apparatus using a secondary battery as a power source according to an embodiment of this application.

Description of reference signs:

5. secondary battery; 51. housing; 52. electrode assembly; 53. cover plate; and 6. electric apparatus.

**DESCRIPTION OF EMBODIMENTS**

Embodiments that specifically disclose a lithium-ion battery, and an electric apparatus in this application are described in detail below with reference to the accompanying drawings as appropriate. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

At present, as compared to traditional fuel-driven devices, issues such mileage anxiety and long charging time have become major obstacles to the development of secondary batteries. How the fast charging capability of secondary batteries is improved is one of the key focuses for persons skilled in the art.

Improving the fast charging capability of batteries is a systematic project, which requires changes and upgrades to the materials of batteries. Traditional research primarily focuses on improving the negative electrode materials, but it also requires coordination with materials such as electrolytes and conductive agents. Therefore, existing batteries with fast charging capabilities still require further improvements. The inventors have found that the lithium-ion battery in the first aspect of this application includes a negative electrode active material with a specific average width-to-length ratio and an electrolyte with a specific ionic conductivity, and has a negative electrode lithiation capacity to positive electrode delithiation capacity ratio CB within a specific range. Adjusting the average width-to-length ratio of particles of the negative electrode active material can effectively reduce the degree of tortuosity inside the negative electrode plate, and enhance the conductivity of the electrolyte, greatly improving the conditions for the liquid-phase transport of lithium ions. In addition, a higher CB value further provides more active sites at the negative electrode for intercalation of lithium ions, thereby improving the large-rate fast charging capability and cycling performance of the battery.

## Lithium-ion batteries

In some embodiments, a first aspect of this application provides a lithium-ion battery, including a positive electrode, a negative electrode, and an electrolyte, where the negative electrode includes a negative electrode current collector and a negative electrode active material layer containing a negative electrode active material attached to at least one surface of the negative electrode current collector; an average width-to-length ratio of particles of the negative electrode active material is 0.1-1, optionally 0.6-1; an ionic conductivity of the electrolyte is 7 mS/cm-15 mS/cm, optionally 8 mS/cm-13 mS/cm, and further optionally 9-11 mS/cm, measured according to HG/T4067-2015; and a negative electrode lithiation capacity to positive electrode delithiation capacity ratio CB is 1.05-1.5, optionally 1.1-1.3, and further optionally 1.1-1.2.

The lithium-ion battery of this application effectively reduces the degree of tortuosity inside the negative electrode plate by including a negative electrode active material with a specific average width-to-length ratio and an electrolyte with a specific ionic conductivity, and having a negative electrode lithiation capacity to positive electrode delithiation capacity ratio CB within a specific range. This improves the conditions for the liquid-phase transport of lithium ions, and provides more active sites at the negative electrode for intercalation of lithium ions, and thereby improves the large-rate fast charging capability and cycling performance of the battery.

In this application, the "width-to-length ratio" of the negative electrode active material refers to the ratio of the width diameter to the length diameter of the negative electrode active material particles. The width-to-length ratio of the negative electrode active material can be obtained through dynamic particle image analysis (for example, using a Sympatec QICPIC dynamic particle image analyzer). The "width diameter" of the negative electrode active material particles is the smallest value between parallel lines tangent to the projected images of the particles. The "length diameter" of the negative electrode active material particles is the largest value between parallel lines tangent to the projected images of the particles. When the width-to-length ratio of the negative electrode active material is small, the negative electrode active material particles have an elongated shape; and when it approaches 1, the negative electrode active material particles have a spherical shape.

In this application, the ionic conductivity of the electrolyte refers the ability of the electrolyte to conduct electricity.

In this application, the term "positive electrode delithiation capacity" refers to the actual delithiation capacity of the positive electrode material in the battery. It is tested in the following method. The battery is disassembled in a PRS340/11-119-11 Braun glove box, and the positive electrode plate is taken to assemble a CR2430 half button cell with a positive electrode-lithium plate configuration, with the area of the positive electrode plate used being a $mm^2$, and the electrolyte used being a solution of 1 M $LiPF_6$ in EC/EMC/DEC = 3/5/2. Then, the assembled half button cell is left to stand for 3 h. The test is carried out at 25°C. Charge (Charge) delithiation is performed first at 0.1C in a voltage range of 2.5 V-e V, where e represents the upper voltage limit designed for the use of the battery cell. Subsequently, discharge (Discharge) lithiation is performed at 0.05C until the battery reaches 2.5 V. The process is implemented twice. The discharge capacity of the button cell at the second cycle is recorded as Y mAh, the actual length and width of the positive electrode film designed for the battery are b mm and c mm, respectively, and the positive electrode active material is applied on d sides of the positive electrode current collector, then the positive electrode delithiation capacity is X = Y/(a * b * c * d).

In some embodiments, the positive electrode delithiation capacity is 2000 mAh-300000 mAh, optionally 3000 mAh-150000 mAh, and further optionally 3000 mAh-4000 mAh.

In this application, the term "negative electrode lithiation capacity" refers to the actual lithiation capacity of the negative electrode material in the battery. The test method is: the battery is disassembled in a PRS340/11-119-11 Braun glove box, and the negative electrode plate is taken to assemble a CR2430 half button cell with a negative electrode-lithium plate configuration, with the area of the negative electrode plate used being f $mm^2$, and the electrolyte used being a solution of 1 M $LiPF_6$ in EC/EMC/DEC = 3/5/2. Then, the assembled half button cell is left to stand for 3 h. The test is carried out at 25°C. Discharge (Discharge) lithiation is performed first at 0.1C in a voltage range of 2 V-0 V. Subsequently, charge (Discharge) delithiation is performed at 0.05C until the battery reaches 2 V. The process is implemented twice. The discharge capacity of the button cell at the second cycle is recorded as Z mAh, the actual length and width of the negative electrode sheet designed for the battery are h mm and i mm, respectively, and the negative electrode active material is applied on d sides of the negative electrode current collector, then the negative electrode delithiation capacity is W = Z/f * h * i * d.

In some embodiments, the negative electrode lithiation capacity is 2100 mAh-315000 mAh, optionally 3000 mAh-100000 mAh, and further optionally 3500 mAh-4500 mAh.

In some embodiments, during a charging process from 0% state of charge (SOC) to 70% state of charge (0% SOC-70% SOC) at 35°C, the battery has a current greater than or equal to 4 times the positive electrode delithiation capacity per unit time, optionally the current is greater than or equal to 5 times the positive electrode delithiation capacity per unit time, and further optionally 5 times to 6.5 times positive electrode delithiation capacity per unit time. This further enhances the large-rate fast charging capability and cycling performance of the battery. In the embodiments, the current is an instantaneous current.

In this application, the "positive electrode delithiation capacity per unit time" refers to the delithiation amount of the positive electrode in a unit time (1h); and the average current generated during this process is used as a baseline for quantifying the current in this application. In this way, the positive electrode delithiation capacity can be correlated with the current.

In some embodiments, during a charging process from 0% state of charge to 70% state of charge at 35°C, typically a constant current direct charging method can be employed. For example, a current corresponding to 4 times the positive electrode delithiation capacity per unit time can be used to charge the battery from 0% state of charge to 70% state of charge. Alternatively, a stepwise charging method can be used. For example, a current corresponding to A times the positive electrode delithiation capacity per unit time can be used for 0% SOC-10% SOC charging, a current corresponding to B times the positive electrode delithiation capacity per unit time can be used for 10% SOC-20% SOC charging, a current corresponding to C times the positive electrode delithiation capacity per unit time can be used for 20% SOC-30% SOC charging, a current corresponding to D times the positive electrode delithiation capacity per unit time can be used for 30% SOC-40% SOC charging, a current corresponding to E times the positive electrode delithiation capacity per unit time can be used for 40% SOC-50% SOC charging, a current corresponding to F times the positive electrode delithiation capacity per unit time can be used for 50% SOC-60% SOC charging, and a current corresponding to G times the positive electrode delithiation capacity per unit time can be used for 60% SOC-70% SOC charging, where A, B, C, D, E, and F are not all equal to 4. Persons skilled in the art can understand that in the stepwise charging method, the SOC and current in each step can be adjusted as needed.

For a sealed battery, its positive electrode delithiation capacity X is tested and obtained using a positive electrode delithiation capacity testing method. The battery is charged in the foregoing charging pattern, and then disassembled to take the positive electrode plate. The positive electrode delithiation capacity Z then is tested and obtained using the positive electrode delithiation capacity testing method. If $Z/X \geq 40\%$, it is considered that the battery has a charging rate compared to 4 times the positive electrode delithiation capacity per unit time.

In some embodiments, during a charging process from 0% state of charge to 70% state of charge (0% SOC-70% SOC) at 35°C, the battery has an average current greater than or equal to 4 times the positive electrode delithiation capacity per unit time, optionally greater than or equal to 5 times the positive electrode delithiation capacity per unit time. This further enhances the large-rate fast charging capability and cycling performance of the battery.

In an embodiment, if constant current direct charging is used in the average current test method for 0%-70% SOC charging, the average current is the charging current. If the foregoing stepwise charging method is used, the average current is (A + B + C + D + E + F + G)/7.

In some embodiments, the porosity of the negative electrode active material layer is 20%-60%, optionally 25%-40%, and further optionally 25-31%. This further provides more active sites at the negative electrode for the intercalation of lithium ions, thereby improving the large-rate fast charging capability and cycling performance of the battery.

In some embodiments, the negative electrode active material layer has a compacted density of 1.2 g/cm$^3$-1.9 g/cm$^3$, optionally 1.5 g/cm$^3$-1.78 g/cm$^3$, and a coating weight of 5 mg/cm$^2$-18 mg/cm$^2$. This further provides more active sites at the negative electrode for the intercalation of lithium ions, thereby improving the large-rate fast charging capability and cycling performance of the battery.

In some embodiments, the active material layer includes a first active material layer containing a first negative electrode active material, and a second active material layer containing a second negative electrode active material attached to a surface of the first active material layer away from the current collector. This further improves the conditions for the liquid-phase transport of lithium ions, and provides more active sites at the negative electrode for the intercalation of lithium ions, thereby improving the large-rate fast charging capability and cycling performance of the battery.

In some embodiments, a volume-based median particle size $D_v50$ of the first negative electrode active material is greater than a volume-based median particle size $D_v50$ of the second negative electrode active material. This further provides more active sites at the negative electrode for the intercalation of lithium ions, thereby improving the large-rate fast charging capability and cycling performance of the battery.

In some embodiments, a volume-based median particle size $D_v50$ of the first negative electrode active material is

10 $\mu$m-20 $\mu$m, optionally 12 $\mu$m-16 $\mu$m; and a volume-based median particle size $D_v50$ of the second negative electrode active material $D_v50$ is 9 $\mu$m-19 $\mu$m, measured according to the particle size distribution laser diffraction method (refer to GB/T19077.1-2009).

In some embodiments, the first negative electrode active material layer has a thickness of 10 $\mu$m-120 $\mu$m, and the second negative electrode active material layer a thickness of 10 $\mu$m-120 $\mu$m, as measured according to scanning electron microscope ion polishing cross-sectional topography analysis (refer to JY/T010-1996 for specific details) (the measurement is performed at least 5 locations and the average value is taken).

In some embodiments, the negative electrode active material includes natural graphite, artificial graphite, mesocarbon microbeads, hard carbon, soft carbon, silicon, silicon-carbon composite, silicon oxide, or a combination thereof. This further provides more active sites at the negative electrode for the intercalation of lithium ions, thereby improving the large-rate fast charging capability and cycling performance of the battery.

In some embodiments, the thickness of the negative electrode active material layer is 30 $\mu$m-150 $\mu$m. This further improves the conditions for the liquid-phase transport of lithium ions, and provides more active sites at the negative electrode for the intercalation of lithium ions, thereby improving the large-rate fast charging capability and cycling performance of the battery.

In some embodiments, the compacted density of the first negative electrode active material layer is greater than the compacted density of the second negative electrode active material layer. This further provides more active sites at the negative electrode for the intercalation of lithium ions, thereby improving the large-rate fast charging capability and cycling performance of the battery.

In some embodiments, the compacted density of the first negative electrode active material layer is 1.3 g/cm$^3$-2 g/cm$^3$, and the compacted density of the second negative electrode active material is 1.2 g/cm$^3$-1.9 g/cm$^3$. A mass of the negative electrode material layer is measured through a standard balance and a coating area of the negative electrode plate is measured through a ruler. Then, a mass per unit area of the negative electrode material layer, that is, a coating surface density CW (mg/ cm$^2$) can be calculated. The thickness of the negative electrode material layer is measured (at least 5 locations are measured, and the average value is taken) through scanning electron microscope ion polishing cross-sectional topography analysis (refer to JY/T010-1996 for specific details). Then, the compacted density PD (in mg/cm$^3$) of the negative electrode material layer is calculated according to: compacted density of the coating film = negative electrode plate coating surface density CW (mg/cm$^2$)/thickness of the negative electrode material layer (cm). The PD is then converted to g/cm$^3$ for measurement.

In some embodiments, the electrolyte includes a lithium salt, a solvent, and an additive; where the lithium salt includes a primary lithium salt and a secondary lithium salt. This further improves the conditions for the liquid-phase transport of lithium ions, thereby improving the large-rate fast charging capability and cycling performance of the battery.

In some embodiments, the primary lithium salt is different from the secondary lithium salt, and the primary or secondary lithium salt is each independently selected from at least one of LiPF$_6$, LiN(SO$_2$F)$_2$(LiFSI), LiBF$_4$, LiN(CF$_3$SO$_2$)$_2$ (LiTFSI), LiClO$_4$, LiAsF$_6$, LiB(C$_2$O$_4$)$_2$(LiBOB), LiBF$_2$C$_2$O$_4$(LiDFOB), lithium difluorodioxalate phosphate (LiDFOP), LiPO$_2$F$_2$, LiFSO$_3$, and LiF. This further improves the conditions for the liquid-phase transport of lithium ions, thereby improving the large-rate fast charging capability and cycling performance of the battery. The main difference between the primary lithium salt and the secondary lithium salt lies in their respective percentages.

In some embodiments, the primary lithium salt is lithium hexafluorophosphate or LiFSI, accounting for 8wt%-20wt% based on the total weight of the electrolyte; and the secondary lithium salt is at least one of lithium difluoroxalate borate LiBF$_2$C$_2$O$_4$ (LiDFOB), LiBF$_4$, LiB(C$_2$O$_4$)$_2$ (LiBOB), and lithium difluorodioxalate phosphate (LiDFOP), optionally LiDFOB or LiDFOP, accounting for 0.001wt%-2wt% based on the total weight of the electrolyte. This further improves the conditions for the liquid-phase transport of lithium ions, thereby improving the large-rate fast charging capability and cycling performance of the battery.

In some preferred embodiments, the molar concentration b of lithium salts in the electrolyte is 0.6 mol/L-1.5 mol/L.

In some embodiments, the solvent includes a cyclic ester and a linear ester; where the cyclic ester accounts for 5%-40% of the solvent by mass, and the linear ester accounts for 60%-95% of the solvent by mass. This further improves the conditions for the liquid-phase transport of lithium ions, thereby improving the large-rate fast charging capability and cycling performance of the battery.

In some embodiments, the cyclic ester is ethylene carbonate (EC), propylene carbonate (PC), or a combination thereof; and the linear ester includes dimethyl carbonate (DMC). This further improves the conditions for the liquid-phase transport of lithium ions, thereby improving the large-rate fast charging capability and cycling performance of the battery.

In some embodiments, the linear ester may include, in addition to DMC, at least one selected from the following components: diethyl carbonate (DEC), ethyl methyl carbonate (EMC), methyl formate, methyl acetate (MA), ethyl acetate (EA), butyl acetate, acetonitrile (SN), methyl propionate, propionic acid ethyl ester (EP), methyl butyrate, ethyl butyrate, propyl butyrate, butyl butyrate, isopropyl acetate, isoamyl acetate, and a combination thereof; optionally diethyl carbonate DEC, ethyl acetate EA, methyl acetate MA, acetonitrile SN, ethyl propionate EP, and a combination thereof. This further improves the conditions for the liquid-phase transport of lithium ions, thereby improving the large-rate fast charging capability and cycling performance of the battery.

In a preferred embodiment, the cyclic ester is ethylene carbonate (EC), and the linear ester includes dimethyl carbonate (DMC) and methyl ethyl carbonate (EMC).

In some embodiments, a mass percentage b% of the linear ester in the solvent and the ionic conductivity a (mS/cm) of the electrolyte satisfy the following relationship:

$8 \leq a + 3b\% \leq 16$, optionally $9 \leq a + 3b\% \leq 15$. This further improves the conditions for the liquid-phase transport of lithium ions, thereby improving the large-rate fast charging capability and cycling performance of the battery.

In some embodiments, the positive electrode includes a current collector and a positive electrode active material layer containing a positive electrode active material attached to at least one surface of the current collector, where the positive electrode active material includes a ternary represented by formula $LiNi_xCo_yQ_zM_{1-x-y-z}O_2$, where Q is Mn or Al, M includes at least one of Co, Ni, Mn, Mg, Cu, Zn, Al, Sn, B, Ga, Cr, Sr, V, and Ti, $0 \leq x < 1$, optionally $0.5 \leq x < 1$, $0 \leq y \leq 1$, $0 \leq z \leq 1$, and $x + y + z \leq 1$. This further enhances the large-rate fast charging capability and cycling performance of the battery.

A second aspect of this application provides an electric apparatus, characterized by including the secondary battery according to the first aspect of this application.

The following describes a lithium-ion battery, and an electric apparatus in this application with appropriate reference to the accompanying drawings.

Generally, the lithium-ion battery includes a positive electrode, a negative electrode, an electrolyte, and a separator. In a charging and discharging process of the battery, active ions are intercalated and deintercalated between the positive electrode and the negative electrode. The electrolyte conducts ions between the positive electrode and the negative electrode. The separator is disposed between the positive electrode and the negative electrode to prevent short circuit of the positive electrode and negative electrode and to allow the ions to pass through.

Positive electrode

The positive electrode includes a positive electrode current collector and a positive electrode film layer provided on at least one surface of the positive electrode current collector, and the positive electrode film layer includes a positive electrode active material. The positive electrode active material includes a ternary material of the formula $LiNi_xCo_yQ_zM_{1-x-y-z}O_2$, where Q is Mn or Al, M includes at least one of Co, Ni, Mn, Mg, Cu, Zn, Al, Sn, B, Ga, Cr, Sr, V, and Ti, $0 \leq x < 1$, optionally $0.5 \leq x < 1$, $0 \leq y \leq 1$, $0 \leq z \leq 1$, and $x + y + z \leq 1$.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil or a composite current collector. For example, an aluminum foil may be used as the metal foil. The composite current collector may include a polymer material substrate and a metal layer formed on at least one surface of the polymer material substrate. The composite current collector may be formed by forming a metal material on a polymer material substrate. The metal material includes, but is not limited to, aluminum, aluminum alloy, nickel, nickel alloy, titanium, titanium alloy, silver, and silver alloy, and the like. The polymer material substrate (such as substrates of polypropylene (PP), polyethylene terephthalate (PET), polybutylene terephthalate (PBT), polystyrene (PS), or polyethylene (PE))

In some embodiments, the positive electrode active material may be at least one of lithium nickel cobalt oxide, lithium nickel cobalt manganese oxide ($LiNi_{1/3}Co_{1/3}Mn_{1/3}O_2$ (NCM333 for short), $LiNi_{0.5}Co_{0.2}Mn_{0.3}O_2$ (NCM523 for short), $LiNi_{0.5}Co_{0.25}Mn_{0.25}O_2$(NCM211 for short), $LiNi_{0.6}Co_{0.2}Mn_{0.2}O_2$ (NCM622 for short), $LiNi_{0.8}Co_{0.1}Mn_{0.1}O_2$ (NCM811 for short)), lithium nickel cobalt aluminum oxide (for example, $LiNi_{0.85}Co_{0.15}Al_{0.05}O_2$), $LiNi_{1/3}Co_{1/3}Al_{1/3}O_2$, or a modified compound thereof, preferably NCM622. However, this application is not limited to such materials, and may alternatively use other conventional well-known materials that can be used as positive electrode active materials for batteries. One type of these positive electrode active materials may be used alone, or two or more of them may be used in combination.

In some embodiments, the positive electrode active material may further include another well-known positive electrode active material used for batteries in the art. As an example, the other positive electrode active material may include at least one of the following: olivine-structured lithium-containing phosphate, lithium cobalt oxide (for example, $LiCoO_2$), lithium nickel oxide (for example, $LiNiO_2$), lithium manganese oxide (for example, $LiMnO_2$ and $LiMn_2O_4$), lithium manganese cobalt oxide, lithium nickel manganese oxide, and a modified compound thereof. Examples of the olivine-structured lithium-containing phosphate may include but are not limited to at least one of lithium iron phosphate (for example, $LiFePO_4$ (LFP for short)), composite material of lithium iron phosphate and carbon, lithium manganese phosphate (for example, $LiMnPO_4$), composite material of lithium manganese phosphate and carbon, lithium manganese iron phosphate, and composite material of lithium manganese iron phosphate and carbon.

In some embodiments, the weight ratio of the positive electrode active material in the positive electrode film layer is 80wt%-100wt% based on a total weight of the positive electrode film layer.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. The weight ratio of the binder in the positive electrode film layer is 0wt%-20wt% based on the total weight of the positive electrode film layer.

In some embodiments, the positive electrode film layer further optionally includes a conductive agent. For example, the conductive agent may include at least one of superconducting carbon, carbon black (for example, acetylene black and Ketjen black), carbon dot, carbon nanotube, graphene, and carbon nanofiber. The weight ratio of the conductive agent in the positive electrode film layer is 0wt%-20wt% based on the total weight of the positive electrode film layer.

In some embodiments, the positive electrode may be prepared in the following manner: the foregoing constituents for preparing the positive electrode, for example, the positive electrode active material, the conductive agent, the binder, and any other constituent, are dispersed in a solvent (for example, N-methylpyrrolidone) to form a positive electrode slurry; where a solid content of the positive electrode slurry is 40wt%-80wt%, and a viscosity at room temperature is adjusted to 5000 mPa·s-25000 mPa·s. The positive electrode slurry is applied on a surface of the positive electrode current collector, dried, and then cold pressed by a cold rolling machine to form a positive electrode. A surface density of the positive electrode powder coating is 12 mg/cm$^2$-26 mg/cm$^2$. The positive electrode a compacted density of 2.0 g/cm$^3$-3.6 g/cm$^3$, optionally 2.3 g/cm$^3$-3.5 g/cm$^3$. The formula for calculating the compacted density is:

compacted density = coating surface density/(thickness after compaction - current collector thickness).

Negative electrode

The negative electrode includes a negative electrode current collector and a negative electrode film layer (also referred to as a negative electrode active material layer) disposed on at least one surface of the negative electrode current collector, and the negative electrode active material layer includes a negative electrode active material. The active material layer includes a first active material layer containing a first negative electrode active material, and a second active material layer containing a second negative electrode active material attached to a surface of the first active material layer away from the current collector. The negative electrode has the technical features with respect to negative electrodes as described above in this application.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil or a composite current collector. For example, for the metal foil, a copper foil may be used. The composite current collector may include a polymer material substrate and a metal layer formed on at least one surface of the polymer material substrate. The composite current collector may be formed by forming a metal material on a polymer material substrate. The metal material includes, but is not limited to, copper, copper alloy, nickel, nickel alloy, titanium, titanium alloy, silver, silver alloy, or the like. The polymer material substrate includes, but is not limited to, substrates such as polypropylene (PP), polyethylene terephthalate (PET), polybutylene terephthalate (PBT), polystyrene (PS), and polyethylene (PE).

In some embodiments, the negative electrode active material may be a well-known negative electrode active material used for a battery in the art. For example, the negative electrode active material may include at least one of the following materials: artificial graphite, natural graphite, soft carbon, hard carbon, silicon-based material, tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, but may use other conventional materials that can be used as negative electrode active materials for batteries instead. One of these negative electrode active materials may be used alone, or two or more of them may be used in combination. The weight ratio of the negative electrode active material in the negative electrode film layer is 70wt%-100wt% based on a total weight of the negative electrode film layer.

In some embodiments, the negative electrode active material includes at least one of natural graphite, artificial graphite, mesocarbon microbead, hard carbon, soft carbon, silicon, silicon-carbon composite, silicon oxide, or a combination thereof.

In some embodiments, the negative electrode active material includes one or more of natural graphite, artificial graphite, mesocarbon microbead (MCMB for short), hard carbon, soft carbon, silicon, silicon-carbon composite, silicon-oxygen composite, Li-Sn alloy, Li-Sn-O alloy, Sn, SnO, SnO$_2$, spinel-structure lithiated TiO$_2$-Li$_4$Ti$_5$O$_{12}$, or Li-Al alloy.

In some embodiments, the first negative electrode active material is at least one of natural graphite, artificial graphite, mesocarbon microbead (MCMB for short), hard carbon, soft carbon, silicon, silicon-carbon composite, silicon-oxygen composite, Li-Sn alloy, Li-Sn-O alloy, Sn, SnO, SnO$_2$, spinel-structure lithiated TiO$_2$-Li$_4$Ti$_5$O$_{12}$, or Li-Al alloy. The second negative electrode active material is at least one of natural graphite, artificial graphite, mesocarbon microbead (MCMB for short), hard carbon, soft carbon, silicon, silicon-carbon composite, silicon-oxygen composite, Li-Sn alloy, Li-Sn-O alloy, Sn, SnO, $SnO_2$, spinel-structure lithiated $TiO_2$-$Li_4Ti_5O_{12}$, or Li-Al alloy.

In some embodiments, the negative electrode active material includes silicon. The silicon accounts for 1%-10% of the weight of the negative electrode active material layer, distributed in at least one layer of the active material layers.

In some embodiments, a percentage of the silicon (in terms of $SiO_2$) in the first active material layer is 0%-25% based on a weight of the first active material layer; and a percentage of the silicon (in terms of $SiO_2$) in the second active material layer is 0%-25% based on a weight of the second active material layer.

In some embodiments, the negative electrode film layer may further optionally include a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS). The weight ratio of the binder in the negative electrode film layer is 0wt%-30wt% based on the total weight of the negative electrode film layer.

In some embodiments, the negative-electrode film layer further optionally includes a conductive agent. The conductive agent may be selected from at least one of superconducting carbon, carbon black (for example, acetylene black and Ketjen black), carbon dot, carbon nanotube, graphene, and carbon nanofiber. The weight ratio of the conductive agent in the negative electrode film layer is 0wt%-20wt% based on the total weight of the negative electrode film layer.

In some embodiments, the negative electrode film layer may further optionally include other additives such as a thickener (for example, sodium carboxymethyl cellulose (CMC-Na)). The weight ratio of the other additives in the negative electrode film layer is 0wt%-15wt% based on the total weight of the negative electrode film layer.

In some embodiments, the negative electrode may be prepared by using the following method: the foregoing components used for preparing a negative electrode, for example, the negative electrode active material, conductive agent, binder, and any other components, are dispersed in a solvent (for example, deionized water) to form a negative electrode slurry; where a solid content of the negative electrode slurry is 30wt%-70wt%, and a viscosity at room temperature is adjusted to 2000 mPa s-10000 mPa s. The obtained negative electrode slurry is applied on the negative electrode current collector, followed by drying, cold pressing, for example roll-to-roll method, to obtain the negative electrode. A surface density of the negative electrode powder coating is 6mg/cm$^2$-16 mg/cm$^2$. The negative electrode has a compacted density of 1.2g/m$^3$-2.0 g/m$^3$.

A porosity P of the negative electrode active material layer can be obtained using the gas displacement method. The porosity P = (V1 - V2)/V1 × 100%, where V1 represents an apparent volume of the negative electrode active material layer, and V2 represents the actual volume of the negative electrode active material layer.

The mass M of the negative electrode active material in the negative electrode active material layer per unit area can be obtained by weighing using a standard balance.

The thickness T of the negative electrode active material layer can be measured with a ten-thousandths micrometer. For example, a ten-thousandths micrometer of model Mitutoyo293-100 with 0.1 $\mu$m resolution can be used. It should be noted that the thickness of the negative electrode active material layer described in this invention refers to the thickness of the negative electrode active material layer in the negative electrode that is compacted by cold pressing and is used for assembling the battery.

Electrolyte

The electrolyte conducts ions between the positive electrode and the negative electrode.

The electrolyte has the technical features as described above in this application.

In some embodiments, the electrolyte includes a lithium salt, a solvent, and an additive; where the lithium salt includes a primary lithium salt and a secondary lithium salt.

In some embodiments, the primary lithium salt is different from the secondary lithium salt, and the primary lithium salt or secondary lithium salt is each independently selected from one or more of Lithium hexafluorophosphate (LiPF$_6$), lithium bisfluorosulfonyl imide (LiN(SO$_2$F)$_2$, LiFSI), lithium tetrafluoroborate (LiBF$_4$), lithium bistrifluoromethanesulfonyl imide (LiTFSI), lithium perchlorate (LiClO$_4$) , lithium hexafluoroarsenate (LiAsF$_6$), lithium trifluoromethanesulfonate (LiTFS), lithium dioxaloborate (LiB(C$_2$O$_4$)$_2$, LiBOB), lithium difluoroxaloborate (LiBF$_2$C$_2$O$_4$, LiDFOB), lithium difluorophosphate (LiPO$_2$F$_2$), lithium difluorodioxalate phosphate (LiDFOP), LiPO$_2$F$_2$, LiFSO$_3$, LiF, and lithium tetrafluorooxalate phosphate (LiTFOP).

In some embodiments, the primary lithium salt is different from the secondary lithium salt, and the primary or secondary lithium salt is each independently selected from at least one of LiPF$_6$, LiN(SO$_2$F)$_2$(LiFSI), LiBF$_4$, LiN(CF$_3$SO$_2$)$_2$ (LiTFSI), LiClO$_4$, LiAsF$_6$, LiB(C$_2$O$_4$)$_2$(LiBOB), LiBF$_2$C$_2$O$_4$(LiDFOB), lithium difluorodioxalate phosphate (LiDFOP), LiPO$_2$F$_2$, LiFSO$_3$, and LiF. The main difference between the primary lithium salt and the secondary lithium salt lies in their respective percentages.

In some preferred embodiments, the primary lithium salt is lithium hexafluorophosphate or LiFSI, accounting for 8wt%-20wt% based on the total weight of the electrolyte; and the secondary lithium salt is at least one of lithium difluoroxalate borate $LiBF_2C_2O_4$ (LiDFOB), $LiBF_4$, $LiB(C_2O_4)_2$ (LiBOB), and lithium difluorodioxalate phosphate (LiDFOP), optionally LiDFOB or LiDFOP, accounting for 0.001wt%-2wt% based on the total weight of the electrolyte.

In some preferred embodiments, the molar concentration b of lithium salts in the electrolyte is 0.8 mol/L-1.2 mol/L.

In some embodiments, the solvent includes a cyclic ester and a linear ester; where the cyclic ester accounts for 5%-40% of the solvent by mass, and the linear ester accounts for 60%-95% of the solvent by mass.

In some embodiments, the cyclic ester is ethylene carbonate (EC), propylene carbonate (PC), or a combination thereof; and the linear ester includes dimethyl carbonate (DMC).

In some embodiments, the linear ester may include, in addition to DMC, at least one selected from the following components: diethyl carbonate (DEC), ethyl methyl carbonate (EMC), methyl formate, methyl acetate (MA), ethyl acetate (EA), butyl acetate, acetonitrile (SN), methyl propionate, propionic acid ethyl ester (EP), methyl butyrate, ethyl butyrate, propyl butyrate, butyl butyrate, isopropyl acetate, isoamyl acetate, and a combination thereof; optionally diethyl carbonate DEC, ethyl acetate EA, methyl acetate MA, acetonitrile SN, ethyl propionate EP, and a combination thereof.

In a preferred embodiment, the cyclic ester is ethylene carbonate (EC), and the linear ester includes dimethyl carbonate (DMC) and methyl ethyl carbonate (EMC).

In some embodiments, the additive includes carbonate (for example, fluoroethylene carbonate FEC), sulfate (for example, vinyl sulfate DTD), and sulfonate (for example, 1,3-propanesultone PS). The carbonate includes at least one of fluoroethylene carbonate (FEC), vinylene carbonate (VC), 1,2-difluoroethylene carbonate, 1,1-difluoroethylene carbonate, 1,1,2-trifluoroethylene carbonate ethyl ester, 1,1,2,2-tetrafluoroethylene carbonate, 1-fluoro-2-methylethylene carbonate, 1-fluoro-1-methylethylene carbonate, 1,2-dicarbonate fluoro-1-methylethylene carbonate, 1,1,2-trifluoro-2-methylethylene carbonate, or trifluoromethylethylene carbonate. The sulfate includes at least one of vinyl sulfate (DTD), diethyl sulfate (DES), dimethyl sulfate (DMS), and 4,4-bis(1,3,2-dioxathiolane)-2, 2,2,2-tetraoxide. The sulfonate includes at least one of 1,3-propane sultone (1,3-PS), propylene sultone (PES), 3-fluoro-1,3-propane sultone (FPS), and methane disulfonate acid vinyl ester (MMDS).

In some preferred embodiments, the additive includes fluoroethylene carbonate (FEC), vinyl sulfate (DTD), and 1,3-propane sultone (1,3-PS).

In some preferred embodiments, the mass percentage the additive is 0%-7% based on the total mass of the electrolyte.

In some embodiments, the electrolyte further optionally includes other additives. For example, the other additives may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

Separator

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the thickness of the separator is 6 $\mu$m-40 $\mu$m, optionally 12 $\mu$m-20 $\mu$m.

In some embodiments, the positive electrode, the negative electrode, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, which, for example, may be polypropylene, polybutylene terephthalate, and polybutylene succinate.

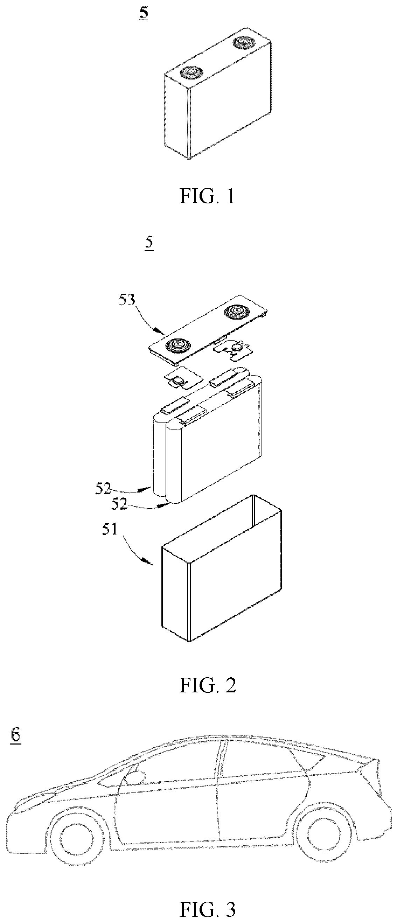

This application does not impose any special limitations on a shape of the secondary battery, and the secondary battery may be cylindrical, rectangular, or of any other shapes. For example, FIG. 1 shows a secondary battery 5 of a rectangular structure as an example.

In some embodiments, referring to FIG. 2, the outer package may include a housing 51 and a cover plate 53. The housing 51 may include a base plate and a side plate connected to the base plate, and the base plate and the side plate enclose an accommodating cavity. The housing 51 has an opening communicating with the accommodating cavity, and the cover plate 53 can cover the opening to close the accommodating cavity. The positive electrode, the negative electrode, and the separator may form an electrode assembly 52 through winding or laminating. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

In the battery module, a plurality of secondary batteries 5 may be sequentially arranged in a length direction of the battery module. Certainly, the batteries may alternatively be arranged in any other manners. Further, the plurality of secondary batteries 5 may be fastened by using fasteners.

Optionally, the battery module may further include a housing with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

The battery pack may include a battery box and a plurality of battery modules arranged in the battery box. The battery box includes an upper box body and a lower box body. The upper box body can cover the lower box body to form an enclosed space for accommodating the battery modules. The plurality of battery modules may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 3 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. The apparatus usually requires to be light and thin, and a secondary battery may be used as a power source.

Examples

To describe the technical problems solved by this application, technical solutions, and beneficial effects of this application more clearly, the following further describes this application in detail with reference to the embodiments and accompanying drawings. Apparently, the described embodiments are merely some rather than all of the embodiments of this application. The following description of at least one exemplary embodiment is merely illustrative and definitely is not construed as any limitation on this application or on use of this application. All other embodiments obtained by a person of ordinary skill in the art based on the embodiments of this application without creative efforts shall fall within the protection scope of this application.

Examples whose technical solutions or conditions are not specified are made in accordance with technical solutions or conditions described in literature in the field or made in accordance with product instructions. The reagents or instruments used are all conventional products that are commercially available if no manufacturer is indicated.

**I. Examples**

Example 1

1. Preparation of electrolyte

The preparation of the electrolyte was carried out in an argon atmosphere glove box with a water amount of < 10 ppm. First, ethylidene carbonate (EC), diethyl methyl carbonate (DMC), and diethyl carbonate (EMC) were mixed according to a mass ratio of 3:4:3, then added with the 1 mol/L primary lithium salt $LiPF_6$, the secondary lithium salt $LiDFOB + LiPO_2F_2$ accounting for 1wt% of the overall electrolyte, and additives FEC + DTD accounting for 5wt% of the overall electrolyte. The resulting mixture was stirred to uniformity to obtain the electrolyte. A concentration of the lithium salt was 1 mol/L. An ionic conductivity of the electrolyte was 10 mS/cm.

2. Preparation of positive electrode plate

A positive electrode ternary active material $LiNi_{1/3}Co_{1/3}Mn_{1/3}O_2$, a binder polyvinylidene fluoride, and a conductive agent acetylene black were mixed at a weight ratio of 98:1:1 and dissolved in a solvent N-methylpyrrolidone (NMP) to make a positive electrode slurry. The resulting slurry was applied on a current collector aluminum foil, and then processes such as drying, cold pressing, edge trimming, cutting, and slitting were performed to prepare a positive electrode plate of the size 87*665 mm, which was kept as a spare part.

3. Preparation of negative electrode plate

Negative electrode active material graphite, $SiO_2$, binder styrene-butadiene rubber, and dispersant sodium carboxymethyl cellulose were dissolved in deionized water at a mass ratio of 92.8:5:1.2:1 to form a negative electrode slurry. A 6 um copper foil was used as the negative electrode current collector, and a first layer of negative electrode slurry was applied on the negative electrode current collector with a coating weight of 4.25 mg/cm$^2$ to form the first active material layer. After the first active material layer was dried, a second negative electrode slurry was applied, which was prepared by dissolving the negative electrode active material graphite, $SiO_2$, binder styrene-butadiene rubber, and dispersant sodium carboxymethyl cellulose in deionized water at a mass ratio of 92.8:5:1.2:1. The second negative electrode slurry was applied at a coating weight of 4.25 mg/cm$^2$ to form a second active material layer.

Then, processes of drying, cold pressing, and cutting were performed to obtain a composite negative electrode plate. After cold pressing, the thickness of the composite active material layer applied on one surface of the copper foil was 51 um, and the compacted density of the active material layer was 1.65 g/cm$^3$.

4. Separator

Polyethylene (PE) with a thickness of 8 $\mu$m was used as a separator substrate, a 2 $\mu$m aluminum oxide ceramic layer was coated on two sides of the separator substrate, and finally, 2.5 mg of binder polyvinylidene fluoride (PVDF) was applied on the two sides coated with the ceramic layers, followed by drying.

5. Battery assembly

The foregoing positive electrode plate, separator, and negative electrode plate were wound or stacked in sequence, so that the separator was placed between the positive and negative electrode plates, to make a jelly roll. The jelly roll was placed in an outer package. 9.5 g of the prepared electrolyte was injected into the dried jelly roll, and then processes such as standing, chemical formation, and shaping were performed to produce a lithium-ion secondary battery of a capacity of 3100 mAh.

The preparation steps of Examples 2 to 27 and Comparative Examples 1 to 6 are similar to those of Example 1, but with changes in the material or composition of the electrolyte or negative electrode, as given in Table 1.

Parameter test

1. Test of porosity P% of negative electrode active material layer

The porosity P% of the negative electrode active material layer might be tested as follows: an inert gas with a small molecular diameter such as helium or nitrogen was used, an actual volume of a sample being tested was accurately measured by using a displacement method, to obtain a porosity of the sample being tested by using the Bohr's law (PV = nRT). Porosity P = (V11 - V12)/V11 $\times$ 100%, where V11 represents an apparent volume of the negative electrode active material layer, and V12 represents the actual volume of the negative electrode active material layer.

2. Test method for average width-to-length ratio distribution of negative electrode active material particles

The width-to-length ratio of the negative electrode active material can be obtained through dynamic particle image analysis (for example, using a Sympatec QICPIC dynamic particle image analyzer).

Table 1 Relevant parameters of the examples and comparative examples

| No. | Electrolyte | | | | Negative electrode active material and amount | $D_V50$ of negative electrode active material ($\mu$m) | Average width-to-length ratio of negative electrode active material | Porosity of negative electrode active material layer | Compacted density of negative electrode active material layer |
|---|---|---|---|---|---|---|---|---|---|
| | Lithium salts and amount | Solvents and ratio | Additives and amount | Ionic conductivity (mS/cm) | | | | | |
| 1 | $LiPF_6$+LiDFOB 1M | EC/DMC/EMC =3/4/3 | FEC+DTD 5% | 10 | Artificial graphite+5% silicon-oxygen composite | 14 | 0.6 | 28 | 1.65 |
| 2 | $LiPF_6$+LiDFOB 1.1M | EC/DMC/EMC =3/4/3 | FEC+DTD 5% | 10.3 | Artificial graphite+5% silicon-oxygen composite | 14 | 0.6 | 28 | 1.65 |
| 3 | LiFSI+LiDFOB 1M | EC/DMC/EMC =3/4/3 | FEC+DTD 5% | 10.8 | Artificial graphite+5% silicon-oxygen composite | 14 | 0.6 | 28 | 1.65 |
| 4 | $LiPF_6$+LiDFOB+ $LiPO_2F_2$1M | EC/DMC/EMC =3/4/3 | FEC+DTD 5% | 10 | Artificial graphite+5% silicon-oxygen composite | 14 | 0.6 | 28 | 1.65 |
| 5 | $LiPF_6$+LiDFOB 1M | EC/DMC/EMC =3/2/5 | FEC+DTD 5% | 9.2 | Artificial graphite+5% silicon-oxygen composite | 14 | 0.6 | 28 | 1.65 |
| 6 | $LiPF_6$+LiDFOB 1M | EC/EMC/DEC =3/4/3 | FEC+DTD 5% | 7.6 | Artificial graphite+5% silicon-oxygen composite | 14 | 0.6 | 28 | 1.65 |
| 7 | $LiPF_6$+LiDFOB 1M | EC/EA/EMC=3 /2/5 | FEC+DTD 5% | 10.2 | Artificial graphite+5% silicon-oxygen composite | 14 | 0.6 | 28 | 1.65 |
| 8 | $LiPF_6$+LiDFOB 1M | EC/MA/EMC= 3/4/3 | FEC+DTD 5% | 14 | Artificial graphite+5% silicon-oxygen composite | 14 | 0.6 | 28 | 1.65 |
| 9 | $LiPF_6$+LiDFOB 1M | EC/DMC/EMC =3/4/3 | FEC+DTD 1% | 10 | Artificial graphite+5% silicon-oxygen composite | 14 | 0.6 | 28 | 1.65 |

(continued)

| No. | Electrolyte | | | | Negative electrode active material and amount | $D_v50$ of negative electrode active material ($\mu$m) | Average width-to-length ratio of negative electrode active material | Porosity of negative electrode active material layer | Compacted density of negative electrode active material layer |
|---|---|---|---|---|---|---|---|---|---|
| | Lithium salts and amount | Solvents and ratio | Additives and amount | Ionic conductivity (mS/cm) | | | | | |
| 10 | LiPF$_6$+LiDFOB 1M | EC/DMC/EMC =3/4/3 | FEC+DTD 3% | 10 | Artificial graphite+5% silicon-oxygen composite | 14 | 0.6 | 28 | 1.65 |
| 11 | LiPF$_6$+LiDFOB 1M | EC/DMC/EMC =3/4/3 | FEC+1,3-PS 3% | 10 | Artificial graphite+5% silicon-oxygen composite | 14 | 0.6 | 28 | 1.65 |
| 12 | LiPF$_6$+LiDFOB 1M | EC/DMC/EMC =3/4/3 | FEC+DTD 5% | 10 | Artificial graphite+1.5% silicon-oxygen composite | 15 | 0.6 | 28 | 1.65 |
| 13 | LiPF$_6$+LiDFOB 1M | EC/DMC/EMC =3/4/3 | FEC+DTD 5% | 10 | artificial graphite+20% natural graphite | 16 | 0.7 | 28 | 1.65 |
| 14 | LiPF$_6$+LiDFOB 1M | EC/DMC/EMC =3/4/3 | FEC+DTD 5% | 10 | artificial graphite+50% natural graphite | 17 | 0.8 | 28 | 1.65 |
| 15 | LiPF$_6$+LiDFOB 1M | EC/DMC/EMC =3/4/3 | FEC+DTD 5% | 10 | Artificial graphite+5% silicon-oxygen composite | 10 | 0.6 | 32 | 1.65 |
| 16 | LiPF$_6$+LiDFOB 1M | EC/DMC/EMC =3/4/3 | FEC+DTD 5% | 10 | Artificial graphite+5% silicon-oxygen composite | 17 | 0.6 | 26 | 1.65 |
| 17 | LiPF$_6$+LiDFOB 1M | EC/DMC/EMC =3/4/3 | FEC+DTD 5% | 10 | Artificial graphite+5% silicon-oxygen composite | 19 | 0.6 | 25 | 1.65 |
| 18 | LiPF$_6$+LiDFOB 1M | EC/DMC/EMC =3/4/3 | FEC+DTD 5% | 10 | Artificial graphite+5% silicon-oxygen composite | 14 | 0.3 | 25 | 1.65 |

| No. | Electrolyte | | | | Negative electrode active material and amount | $D_v50$ of negative electrode active material ($\mu$m) | Average width-to-length ratio of negative electrode active material | Porosity of negative electrode active material layer | Compacted density of negative electrode active material layer |
|---|---|---|---|---|---|---|---|---|---|
| | Lithium salts and amount | Solvents and ratio | Additives and amount | Ionic conductivity (mS/cm) | | | | | |
| 19 | LiPF$_6$+LiDFOB 1M | EC/DMC/EMC =3/4/3 | FEC+DTD 5% | 10 | Artificial graphite+5% silicon-oxygen composite | 14 | 0.5 | 27 | 1.65 |
| 20 | LiPF$_6$+LiDFOB 1M | EC/DMC/EMC =3/4/3 | FEC+DTD 5% | 10 | Artificial graphite+5% silicon-oxygen composite | 14 | 0.8 | 34 | 1.65 |
| 21 | LiPF$_6$+LiDFOB 1M | EC/DMC/EMC =3/4/3 | FEC+DTD 5% | 10 | Artificial graphite+5% silicon-oxygen composite | 14 | 0.9 | 36 | 1.65 |
| 22 | LiPF$_6$+LiDFOB 1M | EC/DMC/EMC =3/4/3 | FEC+DTD 5% | 10 | Artificial graphite+5% silicon-oxygen composite | 14 | 0.6 | 35 | 1.6 |
| 23 | LiPF$_6$+LiDFOB 1M | EC/DMC/EMC =3/4/3 | FEC+DTD 5% | 10 | Artificial graphite+5% silicon-oxygen composite | 14 | 0.6 | 45 | 1.5 |
| 24 | LiPF$_6$+LiDFOB 1M | EC/DMC/EMC =3/4/3 | FEC+DTD 5% | 10 | Artificial graphite+5% silicon-oxygen composite | 14 | 0.6 | 55 | 1.4 |
| 25 | LiPF$_6$+LiDFOB 1M | EC/DMC/EMC =3/4/3 | FEC+DTD 5% | 10 | Artificial graphite+5% silicon-oxygen composite | 14 | 0.6 | 58 | 1.3 |
| 26 | LiPF$_6$+LiDFOB 1M | EC/DMC/EMC =3/4/3 | FEC+DTD 5% | 10 | Artificial graphite+5% silicon-oxygen composite | 14 | 0.6 | 45 | 1.5 |
| 27 | LiPF$_6$+LiDFOB 1M | EC/DMC/EMC =3/4/3 | FEC+DTD 5% | 10 | Artificial graphite+5% silicon-oxygen composite | 14 | 0.6 | 23 | 1.9 |

(continued)

| No. | Electrolyte | | | | Negative electrode active material and amount | $D_v50$ of negative electrode active material (μm) | Average width-to-length ratio of negative electrode active material | Porosity of negative electrode active material layer | Compacted density of negative electrode active material layer |
|---|---|---|---|---|---|---|---|---|---|
| | Lithium salts and amount | Solvents and ratio | Additives and amount | Ionic conductivity (mS/cm) | | | | | |
| Comparative Example 1 | $LiPF_6$ 1M | EC/DMC/EMC =3/4/3 | FEC+DTD 5% | 10 | Artificial graphite+5% silicon-oxygen composite | 14 | 0.6 | 28 | 1.65 |
| Comparative Example 2 | $LiPF_6$+LiDFOB 1M | EC/DMC/EMC =3/4/3 | FEC+DTD 5% | 10 | Artificial graphite+5% silicon-oxygen composite | 14 | 0.01 | 28 | 2.1 |
| Comparative Example 3 | $LiPF_6$+LiDFOB 1M | EC/DMC/EMC =3/4/3 | FEC+DTD 5% | 10 | Artificial graphite+5% silicon-oxygen composite | 14 | 0.05 | 28 | 2.1 |
| Comparative Example 4 | $LiPF_6$+LiDFOB 0.5M | EC/DMC/EMC =3/4/3 | FEC+DTD 5% | 5 | Artificial graphite+5% silicon-oxygen composite | 14 | 0.6 | 28 | 1.65 |
| Comparative Example 5 | $LiPF_6$+LiDFOB 0.3M | EC/DMC/EMC =3/4/3 | FEC+DTD 5% | 3 | Artificial graphite+5% silicon-oxygen composite | 14 | 0.6 | 28 | 1.65 |
| Comparative Example 6 | $LiPF_6$+LiDFOB 1M | EC/DMC/EMC =3/4/3 | FEC+DTD 5% | 10 | Artificial graphite+5% silicon-oxygen composite | 14 | 0.6 | 62 | 1.65 |

**II. Battery performance test**

1. Test of lithium-ion battery CB value

The positive electrode lithiation capacity was tested in the following method. The battery was disassembled in a PRS340/11-119-11 Braun glove box, and the positive electrode plate was taken to assemble a half button cell with a positive electrode-lithium plate configuration, with the area of the positive electrode plate used being a mm$^2$ and the electrolyte used being a solution of 1 M LiPF$_6$ in EC/EMC/DEC = 3/5/2. Then, the assembled half button cell was left to stand for 3 h. The test was carried out at 25°C. Charge (Charge) delithiation was performed first at 0.1C in a voltage range of 2.5 V-e V, where e represented the upper voltage limit designed for the use of the battery cell. Subsequently, discharge (Discharge) lithiation was performed at 0.05C until the battery reached 2.5 V. The process was implemented twice. The discharge capacity of the button cell at the second cycle was recorded as Y mAh, the actual length and width of the positive electrode sheet designed for the battery were b mm and c mm, respectively, and the positive electrode active material was applied on d sides of the positive electrode current collector, then the positive electrode delithiation capacity was X = Y/(a * b * c * d).

The negative electrode delithiation capacity was tested as follows: the battery was disassembled in a PRS340/11-119-11 Braun glove box, and the negative electrode plate was taken to assemble a CR2430 half button cell with a negative electrode-lithium plate configuration, with the area of the negative electrode plate used being f mm$^2$, and the electrolyte used being a solution of 1 M LiPF$_6$ in EC/EMC/DEC = 3/5/2. Then, the assembled half button cell was left to stand for 3 h. The test was carried out at 25°C. Discharge (Discharge) lithiation was performed first at 0.1C in a voltage range of 2 V-0 V. Subsequently, charge (Discharge) delithiation was performed at 0.05C until the battery reached 2 V. The process was implemented twice. The discharge capacity of the button cell at the second cycle was recorded as Z mAh, the actual length and width of the negative electrode sheet designed for the battery were h mm and i mm, respectively, and the negative electrode active material was applied on d sides of the negative electrode current collector, then the negative electrode delithiation capacity was W = Z/f * h * i * d.

$$CB = W/X.$$

2. Test for charging capacity

Rate performance test (performed at charging to 80% SOC): the test temperature was adjusted to 35°C, and the lithium-ion battery was charged at xC (x was 0.5, 0.8, 1, 1.2, 1.5, 2, 2.5, 3) and then discharged at 1C, where the charging rate increased sequentially. An anode potential of 0 V was used as the charging cut-off condition. The maximum charging rates that could be achieved in ranges of 0% SOC-10% SOC, 10% SOC-20% SOC, 20 SOC-30% SOC, 30% SOC-40% SOC, 40% SOC-50% SOC, 50% SOC-60% SOC, and 60% SOC-70% SOC were obtained. Then, the charging time (min) required for 0% SOC-80% SOC was calculated.

3. Test for cycling performance

At 25°C, the secondary battery was charged to 4.3 V at a constant current of 1C and charged to a current of 0.05C at a constant voltage. At this point, the secondary battery was fully charged, and a charge capacity at this point was recorded as a charge capacity of the first cycle. The secondary battery was left standing for 5 min and discharged to 2.8 V at a constant current of 1C. This was a charge and discharge cycle, and a discharge capacity at this time was recorded as a discharge capacity of the first cycle. The secondary battery was subjected to charge and discharge cycling according to the foregoing method, and a discharge capacity of each cycle was recorded. Capacity retention rate (%) of secondary battery of 600-th cycle at 45°C = discharging capacity of 600-th cycle/discharging capacity of first cycle $\times$ 100%

**III. Test results of examples and comparative examples**

The batteries in the examples and comparative examples were prepared according to the foregoing methods, and their performance parameters were measured. Results are shown in Table 2.

## Table 2  Performance of batteries in the examples and comparative examples

| No. | Negative electrode lithiation capacity (mAh) | Positive electrode delithiation capacity (mAh) | CB value | Ratio of maximum charging current to positive electrode delithiation capacity per unit time under 0% SOC–70% SOC charging at 35°C | Time required for 0% SOC–70% SOC charging at 35°C (min) | Capacity retention rate after 600 cycles |
|---|---|---|---|---|---|---|
| 1 | 3472 | 3100 | 1.12 | 5.5 | 8 | 94.0% |
| 2 | 3472 | 3100 | 1.12 | 5.6 | 7.8 | 94.5% |
| 3 | 3472 | 3100 | 1.12 | 5.8 | 7.2 | 95.0% |
| 4 | 3472 | 3100 | 1.12 | 5.5 | 8 | 95.0% |
| 5 | 3472 | 3100 | 1.12 | 5.2 | 8.8 | 93.0% |
| 6 | 3472 | 3100 | 1.12 | 5 | 9.2 | 92.0% |
| 7 | 3472 | 3100 | 1.12 | 5.6 | 7.8 | 94.5% |
| 8 | 3472 | 3100 | 1.12 | 6.6 | 5.8 | 95.0% |
| 9 | 3472 | 3100 | 1.12 | 5.6 | 7.8 | 90.0% |
| 10 | 3472 | 3100 | 1.12 | 5.55 | 7.9 | 92.0% |
| 11 | 3472 | 3100 | 1.12 | 5.4 | 8.2 | 91.5% |
| 12 | 3410 | 3100 | 1.1 | 5.4 | 8.2 | 94.5% |
| 13 | 3596 | 3100 | 1.16 | 5.7 | 7.6 | 94.5% |
| 14 | 3720 | 3100 | 1.2 | 6 | 7 | 95.0% |
| 15 | 3658 | 3100 | 1.18 | 5.7 | 7.6 | 94.5% |
| 16 | 3565 | 3100 | 1.15 | 5.45 | 8.1 | 93.5% |
| 17 | 3503 | 3100 | 1.13 | 5.3 | 8.4 | 92.0% |
| 18 | 4030 | 3100 | 1.3 | 5.1 | 8.8 | 91.0% |
| 19 | 3875 | 3100 | 1.25 | 5.4 | 8.2 | 93.0% |
| 20 | 3565 | 3100 | 1.15 | 5.8 | 7.4 | 94.5% |

| No. | Negative electrode lithiation capacity (mAh) | Positive electrode delithiation capacity (mAh) | CB value | Ratio of maximum charging current to positive electrode delithiation capacity per unit time under 0% SOC–70% SOC charging at 35°C | Time required for 0% SOC–70% SOC charging at 35°C (min) | Capacity retention rate after 600 cycles |
|---|---|---|---|---|---|---|
| 21 | 3441 | 3100 | 1.11 | 6 | 7 | 95.0% |
| 22 | 3472 | 3100 | 1.12 | 5.6 | 7.8 | 94.5% |
| 23 | 3472 | 3100 | 1.12 | 5.8 | 7.4 | 94.5% |
| 24 | 3472 | 3100 | 1.12 | 6 | 7 | 95.0% |
| 25 | 3410 | 3100 | 1.1 | 5.9 | 7.2 | 95.0% |
| 26 | 3441 | 3100 | 1.11 | 5.7 | 7.6 | 94.5% |
| 27 | 3720 | 3100 | 1.2 | 5 | 9 | 92.0% |
| Comparative Example 1 | 3472 | 3100 | 1.12 | 5.5 | 8 | 84.0% |
| Comparative Example 2 | 3472 | 3100 | 1.12 | 2 | 15 | 50.0% |
| Comparative Example 3 | 3472 | 3100 | 1.12 | 3.5 | 12 | 70.0% |
| Comparative Example 4 | 3472 | 3100 | 1.12 | 2 | 15 | 50.0% |
| Comparative Example 5 | 3472 | 3100 | 1.12 | 1 | 17 | 10.0% |
| Comparative Example 6 | 3131 | 3100 | 1.01 | 1 | 17 | 10.0% |

Based on the foregoing examples and comparative examples, it can be concluded that the lithium-ion battery in this application exhibits excellent fast charging capability and capacity retention rate when simultaneously meeting the following conditions: the average width-to-length ratio of the negative electrode active material particles is within the range of 0.1-1, the ionic conductivity of the electrolyte is within the range of 7 mS/cm-15 mS/cm, and the CB value is within the range of 1.1-1.5. For example, the charging time required for 0% SOC-70% SOC can be shortened to 7-8 minutes, and the capacity retention rate remains above 95% after 600 cycles.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

**Claims**

1. A lithium-ion battery, comprising a positive electrode, a negative electrode, and an electrolyte, wherein the negative electrode comprises a negative electrode current collector and a negative electrode active material layer containing a negative electrode active material attached to at least one surface of the negative electrode current collector, wherein an average width-to-length ratio of particles of the negative electrode active material is 0.1-1; an ionic conductivity of the electrolyte is 7 mS/cm-15 mS/cm; and a negative electrode lithiation capacity to positive electrode delithiation capacity ratio CB is 1.05-1.5.

2. The battery according to claim 1, **characterized in that**, during a charging process from 0% state of charge to 70% state of charge, the battery has a current greater than or equal to 4 times the positive electrode delithiation capacity per unit time.

3. The battery according to claim 1 or 2, **characterized in that**, during a charging process from 0% state of charge to 80% state of charge, the battery has an average current greater than or equal to 4 times the positive electrode delithiation capacity per unit time.

4. The battery according to any one of claims 1 to 3, **characterized in that** the negative electrode active material layer has a porosity of 20-60%.

5. The battery according to any one of claims 1 to 4, **characterized in that** the negative electrode active material layer has a compacted density of 1.2-1.9 g/cm$^3$ and a coating weight of 5-18 mg/cm$^2$.

6. The battery according to any one of claims 1 to 5, **characterized in that** the negative electrode active material comprises natural graphite, artificial graphite, mesocarbon microbeads, hard carbon, soft carbon, silicon, a silicon-carbon composite, silicon oxide, or a combination thereof.

7. The battery according to any one of claims 1 to 6, **characterized in that** the negative electrode active material layer has a thickness of 30 $\mu$m-150 $\mu$m.

8. The battery according to any one of claims 1 to 7, **characterized in that** the negative electrode active material layer comprises a first active material layer containing a first negative electrode active material, and a second active material layer containing a second negative electrode active material attached to a surface of the first active material layer away from the current collector.

9. The battery according to claim 8, **characterized in that** a volume-based median particle size $D_v50$ of the first negative electrode active material is greater than a volume-based median particle size $D_v50$ of the second negative electrode active material.

10. The battery according to claim 8 or 9, **characterized in that** a compacted density of the first negative electrode active material layer is greater than a compacted density of the second negative electrode active material layer.

11. The battery according to any one of claims 1 to 10, **characterized in that** the electrolyte comprises a lithium salt, a solvent, and an additive; wherein the lithium salt comprises a primary lithium salt and a secondary lithium salt.

12. The battery according to claim 11, **characterized in that** the primary lithium salt is different from the secondary lithium salt, and the primary lithium salt or secondary lithium salt is each independently selected from at least one of $LiPF_6$, $LiN(SO_2F)_2$, $LiBF_4$, $LiN(CF_3SO_2)_2$, $LiClO_4$, $LiAsF_6$, $LiB(C_2O_4)_2$, $LiBF_2C_2O_4$, lithium difluorodioxalate phosphate, $LiPO_2F_2$, $LiFSO_3$, and LiF.

13. The battery according to claim 11 or 12, **characterized in that** the primary lithium salt is lithium hexafluorophosphate or LiFSI, accounting for 8-20wt% based on a total weight of the electrolyte; and the secondary lithium salt is at least one of lithium difluoroxalate borate, $LiBF_4$, $LiB(C_2O_4)_2$, and lithium difluorodioxalate phosphate, accounting for 0.001wt%-2wt% based on the total weight of the electrolyte.

14. The battery according to any one of claims 11-13, **characterized in that** the solvent comprises a cyclic ester and a linear ester; wherein the cyclic ester accounts for 5-40% of the solvent by mass, and the linear ester accounts for 60-95% of the solvent by mass.

15. The battery according to claim 14, **characterized in that** the cyclic ester is ethylene carbonate, propylene carbonate, or a combination thereof; and the linear ester comprises dimethyl carbonate.

16. The battery according to claim 15, **characterized in that** the linear ester is selected from diethyl carbonate, ethyl methyl carbonate, methyl formate, methyl acetate, ethyl acetate, butyl acetate, methyl propionate, methyl butyrate, ethyl butyrate, propyl butyrate, butyl butyrate, isopropyl acetate, isoamyl acetate, or a combination thereof.

17. The battery according to any one of claims 11 to 16, **characterized in that** a mass percentage b% of the linear ester in the solvent and the ionic conductivity a (mS/cm) of the electrolyte satisfy the following relationship:

$$8 \leq a + 3b\% \leq 16.$$

18. The battery according to any one of claims 1 to 17, **characterized in that** the positive electrode comprises a current collector and a positive electrode active material layer containing a positive electrode active material attached to at least one surface of the current collector, wherein the positive electrode active material comprises a ternary represented by formula $LiNi_xCo_yQ_zM_{1-x-y-z}O_2$, wherein Q is Mn or Al, M comprises at least one of Co, Ni, Mn, Mg, Cu, Zn, Al, Sn, B, Ga, Cr, Sr, V, and Ti, $0 \leq x < 1$, $0 \leq y \leq 1$, $0 \leq z \leq 1$, and $x + y + z \leq 1$.

19. An electric apparatus, **characterized by** comprising a secondary battery selected from any one of claims 1 to 18.

5

FIG. 1

5

53

52
52

51

FIG. 2

6

FIG. 3

## INTERNATIONAL SEARCH REPORT

| International application No. |
| --- |
| **PCT/CN2022/126797** |

**A.    CLASSIFICATION OF SUBJECT MATTER**

H01M10/0525(2010.01)i

According to International Patent Classification (IPC) or to both national classification and IPC

**B.    FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 电池, 负极, 活性材料, 宽长比, 离子导电率, CB值, battery, anode, active material, aspect ratio, ionic conductivity, cell balance

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 105580184 A (THE UNIVERSITY OF TOKYO) 11 May 2016 (2016-05-11) description, paragraphs 126, 131-137, 207-217, 225, 279-346, 454-458 and 793-804 | 1-19 |
| Y | CN 105514350 A (DONGGUAN AMPEREX TECHNOLOGY LTD.) 20 April 2016 (2016-04-20) description, paragraphs 11-25 | 1-19 |
| Y | CN 113036298 A (NINGDE CONTEMPORARY AMPEREX TECHNOLOGY CO., LTD.) 25 June 2021 (2021-06-25) description, paragraphs 27-55 | 8-10 |
| Y | CN 103441305 A (SHENZHEN BTR NEW ENERGY MATERIALS CO., LTD.) 11 December 2013 (2013-12-11) description, paragraphs 5-35 | 1-19 |
| Y | CN 115101803 A (JIANGSU ZENERGY BATTERY TECHNOLOGIES CO., LTD.) 23 September 2022 (2022-09-23) description, paragraphs 27-66 | 1-19 |
| A | JP 2013232326 A (ASAHI KASEI CORPORATION) 14 November 2013 (2013-11-14) entire document | 1-19 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 July 2023** | **10 July 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/126797**

| Patent document cited in search report | | | Publication date (day/month/year) | Patent family member(s) | | | Publication date (day/month/year) |
|---|---|---|---|---|---|---|---|
| CN | 105580184 | A | 11 May 2016 | DE | 112014004442 | T5 | 23 June 2016 |
| | | | | US | 2016226100 | A1 | 04 August 2016 |
| | | | | US | 11011781 | B2 | 18 May 2021 |
| | | | | KR | 20160062075 | A | 01 June 2016 |
| | | | | KR | 101901675 | B1 | 27 September 2018 |
| | | | | WO | 2015045387 | A1 | 02 April 2015 |
| | | | | JP | 2015088474 | A | 07 May 2015 |
| | | | | JP | 2015088475 | A | 07 May 2015 |
| | | | | JP | 2015088476 | A | 07 May 2015 |
| | | | | JP | 2015195163 | A | 05 November 2015 |
| | | | | JP | 2015195164 | A | 05 November 2015 |
| | | | | JP | 2016006790 | A | 14 January 2016 |
| | | | | JP | 6437399 | B2 | 12 December 2018 |
| | | | | CN | 105580184 | B | 12 March 2019 |
| | | | | JP | 5817001 | B2 | 18 November 2015 |
| | | | | JP | 5817002 | B2 | 18 November 2015 |
| | | | | JP | 5817003 | B2 | 18 November 2015 |
| | | | | JP | 5817004 | B2 | 18 November 2015 |
| | | | | JP | 5817005 | B2 | 18 November 2015 |
| CN | 105514350 | A | 20 April 2016 | KR | 20170057220 | A | 24 May 2017 |
| | | | | KR | 102227417 | B1 | 15 March 2021 |
| | | | | JP | 2016072226 | A | 09 May 2016 |
| | | | | JP | 6124954 | B2 | 10 May 2017 |
| | | | | US | 2016093912 | A1 | 31 March 2016 |
| | | | | US | 2018366776 | A1 | 20 December 2018 |
| | | | | KR | 20160036482 | A | 04 April 2016 |
| CN | 113036298 | A | 25 June 2021 | CN | 113036298 | B | 11 February 2022 |
| CN | 103441305 | A | 11 December 2013 | CN | 103441305 | B | 21 September 2016 |
| CN | 115101803 | A | 23 September 2022 | None | | | |
| JP | 2013232326 | A | 14 November 2013 | JP | 5977573 | B2 | 24 August 2016 |

Form PCT/ISA/210 (patent family annex) (July 2022)